(19) Europäisches Patentamt
European Patent Office
Office européen des brevets

(11) EP 1 628 746 B1

(12) EUROPÄISCHE PATENTSCHRIFT

(45) Veröffentlichungstag und Bekanntmachung des Hinweises auf die Patenterteilung:
02.12.2009 Patentblatt 2009/49

(51) Int Cl.:
B01D 61/46 (2006.01)      B01D 63/10 (2006.01)
B01D 61/48 (2006.01)      C02F 1/469 (2006.01)

(21) Anmeldenummer: 04732563.4

(22) Anmeldetag: 13.05.2004

(86) Internationale Anmeldenummer:
PCT/CH2004/000289

(87) Internationale Veröffentlichungsnummer:
WO 2004/101119 (25.11.2004 Gazette 2004/48)

(54) **WICKELMODUL MIT AXIALEM VERDÜNNUNGSKAMMERFLUSS**

SPIRALLY WOUND MODULE WITH AXIAL DILUTION FLOW

MODULE ENROULÉ EN SPIRALE A FLUX AXIAL EN CHAMBRE DE DILUTION

(84) Benannte Vertragsstaaten:
AT BE BG CH CY CZ DE DK EE ES FI FR GB GR HU IE IT LI LU MC NL PL PT RO SE SI SK TR
Benannte Erstreckungsstaaten:
HR LV

(30) Priorität: 17.05.2003 CH 872032003

(43) Veröffentlichungstag der Anmeldung:
01.03.2006 Patentblatt 2006/09

(73) Patentinhaber: Christ AG
CH-4147 Aesch (CH)

(72) Erfinder:
• MENZEL, Thomas
CH-4148 Pfeffingen (CH)
• BEUSSHAUSEN, Swen
79585 Steinen (DE)
• STÖCKLIN, Denis
FR-68220 Hegenheim (FR)

(74) Vertreter: Bohest AG
Postfach 160
4003 Basel (CH)

(56) Entgegenhaltungen:
EP-A- 0 508 646      WO-A-91/05593
US-A- 4 225 413

• WEN T ET AL: "Spirally wound electrodialysis (SpED) modules" DESALINATION, ELSEVIER SCIENTIFIC PUBLISHING CO, AMSTERDAM, NL, Bd. 101, Nr. 1, 1. März 1995 (1995-03-01), Seiten 79-91, XP004019138 ISSN: 0011-9164
• PATENT ABSTRACTS OF JAPAN Bd. 2000, Nr. 06, 22. September 2000 (2000-09-22) -& JP 2000 070679 A (JAPAN ORGANO CO LTD), 7. März 2000 (2000-03-07)
• PATENT ABSTRACTS OF JAPAN Bd. 2000, Nr. 06, 22. September 2000 (2000-09-22) -& JP 2000 084371 A (JAPAN ORGANO CO LTD), 28. März 2000 (2000-03-28)
• PATENT ABSTRACTS OF JAPAN Bd. 2000, Nr. 24, 11. Mai 2001 (2001-05-11) -& JP 2001 198576 A (KURITA WATER IND LTD), 24. Juli 2001 (2001-07-24)

Bemerkungen:
Die Akte enthält technische Angaben, die nach dem Eingang der Anmeldung eingereicht wurden und die nicht in dieser Patentschrift enthalten sind.

**EP 1 628 746 B1**

**Beschreibung**

Die Erfindung betrifft ein Verfahren zur kontinuierlichen elektrochemischen Entsalzung wässriger salzhaltiger Lösungen und eine Vorrichtung in Form eines Wickelmoduls zur Durchführung dieses Verfahrens.

Es ist bereits seit einiger Zeit bekannt, dass wässerige Lösungen mittels Elektrodialyse entsalzt werden können. Bei diesem Verfahren sind ionenselektive Membranen zwischen zwei Elektroden eingebracht, wobei je zwei Membranen, eine kationenselektive und eine anionenselektive Membran, sowie Abstandshalter jeweils eine Verdünnungskammer bzw. eine Konzentratkammer definieren. In diese Kammern wird oft zusätzlich ein ionenaustauschendes Material eingebracht. Strömt Wasser durch die einzelnen Kammern, wandern Anionen und Kationen entsprechend ihrer Ladung aufgrund eines äusseren elektrischen Potentials, das an den Elektroden angelegt wird. Aufgrund der Ionenwanderung erhält man in der Verdünnungskammer einen an Ionen abgereicherten Volumenstrom (Diluat) und in der Konzentratkammer einen an Ionen angereicherten Volumenstrom (Konzentrat). Es werden in der Regel zwischen den an eine Gleichstromquelle angeschlossenen Elektroden abwechselnd wasserundurchlässige Anionen- und Kationenaustauschermembranen angeordnet. In einer besonderen Ausführungsform werden Verdünnungs- und Konzentratkammer spiralförmig um eine der beiden Elektroden gewickelt, wobei die zweite Elektrode die ganze aufgewickelte Vorrichtung umgibt. Durch die gewickelte Anordnung werden eine Verdünnungskammer und eine Konzentratkammer mit annähernd spiralförmigem Querschnitt definiert. Solche gewickelten Vorrichtungen werden in der Fachsprache als "Wickelmodule" bezeichnet. Wickelmodule werden beispielsweise in "Spirally wound electrodialysis (SpED) modules," Wen et al., Desalination, 101, (1995), seiten 79-91, der JP-A-2000070679, der US-A-4,225,413 und der EP-A-0 570 341 beschrieben.

Ein Nachteil der vorbekannten Entsalzungsverfahren ist, dass der Durchfluss innerhalb der gewickelten Verdünnungskammer tangential, also entlang der von der Verdünnungskammer gebildeten Spiralform vom äusseren Ende der Verdünnungskammer zu ihrem inneren Ende (oder umgekehrt) verläuft, weil im Stand der Technik die Zuführung von zu entsalzender Lösung und die Ableitung des entsalzten Wassers an den inneren und äusseren Enden der Verdünnungskammer des Wickelmoduls (oder umgekehrt) vorgenommen werden. Dies ergibt in der Verdünnungskammer relativ lange Flussstrecken mit damit verbundenen hohen Strömungswiderständen.

Der vorliegenden Erfindung liegt die Aufgabe zugrunde, ein Wickelmodul zur kontinuierlichen elektrochemischen Entsalzung wässriger salzhaltiger Lösungen bereitzustellen.

Diese Aufgabe wird durch ein Wickelmodul wie in Anspruch 1 definiert gelöst.

Gegenstand der Erfindung ist auch ein Entsalzungsverfahren unter Verwendung des erfindungsgemässen Wickelmoduls, wie in Anspruch 12 definiert.

Bevorzugte Aspekte des erfindungsgemässen Wickelmoduls ergeben sich aus den Unteransprüchen 2 bis 11.

Beschreibung der Figuren

Figur 1 ist eine ausgerollte Darstellung eines Verbundes aus Verdünnungskammer und Konzentratkammer.

Figur 2 ist eine seitliche geschnittene Darstellung eines erfindungsgemässen Wickelmoduls, wobei aber die Zuführungen und Ableitungen für die Verdünnungskammer auch angedeutet sind.

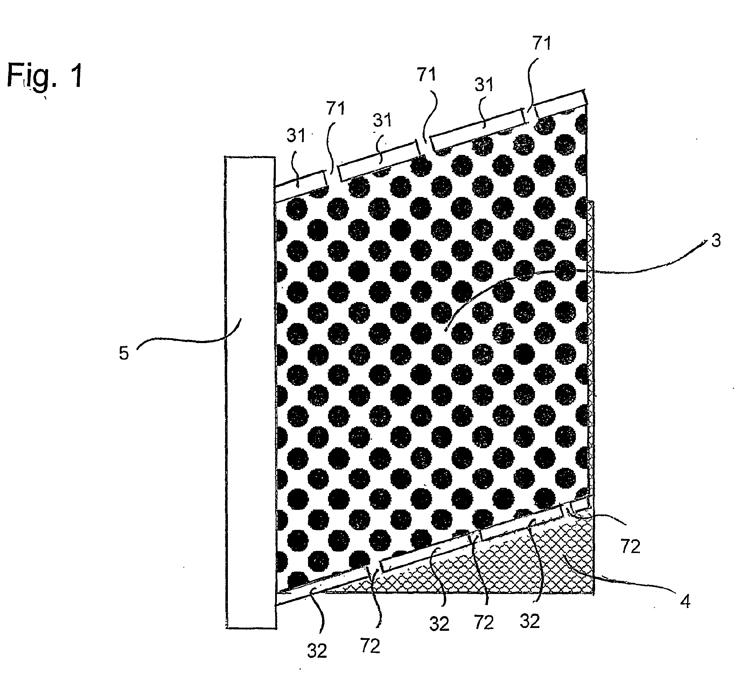

Bei dem erfindungsgemässen Wickelmodul sind die Zuführung für das zu entsalzende Wasser und die Ableitung für das entsalzte Wasser nicht an den äusseren und inneren Enden der Verdünnungskammer, sondern in Seitenwänden der Verdünnungskammer vorgesehen (Figur 1). Dies ergibt einen Fluss innerhalb der Verdünnungskammer, der in etwa parallel zur Mittelachse des Wickelmoduls (axial) erfolgt. Wenn die aufgewickelten Verdünnungs- und Konzentratkammern in etwa ein zylindrisches Wickelmodul mit zwei Stirnflächen definieren, erfolgt der Fluss von der einen Stirnfläche zur anderen Stirnfläche dieses Zylinders. Da der Fluss in der Konzentratkammer tangential bleibt, ergibt dies eine Kreuzströmung der Flüsse der Verdünnungs- und Konzentratkammer. Es wurde gefunden, dass die durch diese erfindungsgemässe Anordnung der Zuführung und Ableitung in der Verdünnungskammer erzielbaren axialen Flüsse viel höher sind als die tangentialen Flüsse der Verdünnungskammer der vorbekannten Wickelmodule.

Die Konzentrat- und Verdünnungskammer (im Rahmen der vorliegenden Anmeldung haben diese Begriffe die in der Fachsprache übliche Bedeutung) weisen einen ähnlichen Aufbau auf, wie er bei den vorbekannten Wickelmodulen zu finden ist. Die Verdünnungskammer ist ein Verbund aus Kationentauschermembran und Anionentauschermembran, zwischen denen ein Abstand eingehalten wird, der das Innenvolumen der Verdünnungskammer bildet. Die Konzentratkammer bildet sich beim Aufwickeln des erfindungsgemässen Wickelmoduls als Zwischenraum zwischen den Windungen des obigen Verbundes, wobei der Abstand wie vorbekannt beispielsweise mittels Abstandshaltern eingehalten werden kann. Die Abstandshalter können im fertigen Zustand des Wickelmoduls auch zur Gewährleistung des Flusses und zur Turbulenzerzeugung vorzugsweise über die gesamte Fläche der beiden Kammern dienen. Als Abstandshalter eignen sich beispielsweise Kunststoffgitter oder Kunststoffgeflechte. Erfindungsgemässe Wicklungsmodule können auch mehrere Verdünnungskammern und Konzentratkammern umfassen (z.B. etwa 2 bis 4), wobei das Aufwickeln des erfindungsgemässen Moduls dann mit der entsprechenden Anzahl Verbunde aus Anionentauschermembran und Kationentauschermembran gleichzeitig ausgeführt wird (siehe unten). Das erfindungsgemässe Wickelmodul kann, wie vorbekannt, in der Verdünnungskammer und/oder der Konzentratkammer zur Verbesserung des Ionenaustausches und der Leitfähigkeit einen Ionentauscher enthalten. Hierzu eignen sich übliche Ionenaustauscherharze, und es können sowohl Einzelharze als auch Mischbettharze verwendet werden. Ausführungsformen des erfindungsgemässen Wickelmoduls, bei denen in der Verdünnungskammer und/oder der Konzentratkammer Ionentauscherharz vorhanden ist, sind bevorzugt. Eine weitere Alternative, die anstelle des Ionentauscherharzes für die Kammern verwendet werden kann, sind ionenleitfähige Gewebe. Es handelt sich hier um Gewebe, die analog zu den Ionentauschern nachträglich mit ionentauschenden Gruppen (z.B. Sulfonat, Carboxymethyl) derivatisiert werden. Ausführungsformen des erfindungsgemässen Wickelmoduls, die solche Gewebe enthalten, sind bevorzugt.

Der Konzentratkammer des erfindungsgemässen Wickelmoduls kann über die erste und zweite Leitung Konzentrat zu- und abgeführt werden. Die Flussrichtung des Konzentrates kann von innen nach aussen oder umgekehrt verlaufen. Das Konzentrat dient der Aufnahme der aus der zu entsalzenden Lösung abgegebenen Ionen, und gleichzeitig als Elektrodenspüllosung. Die in der Regel hohe Salzkonzentration im Konzentrat erleichtert dabei die Ausspülung von Nebenprodukten und den optimalen Einsatz der Elektroden.

Die Dicke der Konzentratkammer kann erfindungsgemäss typisch etwa 0,3 bis etwa 2 mm, bevorzugt etwa 0,5 bis etwa 1 mm betragen. Die Dicke der Verdünnungskammer kann erfindungsgemäss typisch etwa 3 bis etwa 20 mm, bevorzugt etwa 8 bis 11 mm betragen.

Im einfachsten Fall kann nur eine Zuführung für zu entsalzende wässerige salzhaltige Lösung und nur eine Ableitung für entsalztes Wasser vorgesehen sein. Bevorzugt sind aber jeweils mehrere Zuführungen und Ableitungen pro Verdünnungskammer vorgesehen, eher bevorzugt ist dies auch im Falle von mehreren Verdünnungskammern und Konzentratkammern (z.B. etwa 2 bis 4). Wenn mehrere Zuführungen und Ableitungen pro Verdünnungskammer vorgesehen werden, können die Zuführungen und Ableitungen in gleichmässigen Abständen entlang der spiralförmigen Seitenwände der Verdünnungskammer angeordnet sein. Die Anzahl der Zuführungen und/oder Ableitungen kann, wenn der Abstand a immer gleich ist, mittels der Formel:

$$N = (L - a)/(d + a)$$

bestimmt werden, in welcher Formel L die Länge der Verdünnungskammer in ausgerolltem Zustand ist, d der Durchmesser der Zuführungen oder Ableitungen, und N die Anzahl der Zuführungen oder Ableitungen ist. Besonders bevorzugt, so etwa, wenn der nach innen zunehmenden Stromdichte Rechnung getragen werden soll (dies erfordert im inneren Teil der spiralförmigen Verdünnungskammer einen stärkeren Zufluss von zu entsalzender Lösung) können die Zuführungen und Ableitungen in Abständen angeordnet sein, die immer kleiner werden, wenn entlang den spiralförmigen Seitenwänden jeder Verdünnungskammer von aussen nach innen gefahren wird.

Der Innendurchmesser der Zuführung(en) und Ableitung(en) des erfindungsgemässen Wickelmoduls kann typisch im Bereich von etwa 1 bis etwa 5 mm liegen; bevorzugt beträgt er etwa 2 mm.

Die im inneren Hohlraum angeordnete innere Elektrode bzw. die äussere Elektrode weisen vorzugsweise annähernd die Form eines Zylinders bzw. Hohlzylinders auf. Die Elektroden können aus den bei Wickelmodulen üblichen Materialien bestehen. Bevorzugte Anodenmaterialien sind Graphit und mit Edelmetall beschichteter Titanstahl, möglich sind auch DSA-Anoden (Mischoxid-Anoden); bevorzugtes Kathodenmaterial ist rostfreier Stahl. Es ist für das erfindungsgemässe Entsalzungsverfahren im allgemeinen ohne Belang, ob die innere Elektrode als Anode und die äussere Elektrode als Kathode oder die innere Elektrode als Kathode und die äussere Elektrode als Anode gewählt werden. Die innere Elektrode kann massiv oder hohl sein, wobei sie im letzteren Falle vorzugsweise mit einem geeigneten Material, beispielsweise einem Kunststoff wie Polyvinylchlorid, Polyethylen, Polypropylen, ABS, Polyoxyethylen oder Polyphenylenoxid gefüllt ist.

Das gesamte erfindungsgemässe Wickelmodul wird vorzugsweise von einem verstärkten Kunststoffmantel umgeben, so dass es als geschlossenes Rohr nach aussen hin ersichtlich ist und druckbeständig ist. Dies kann beispielsweise dadurch erfolgen, dass das ganze Wickelmodul in einen vorzugsweise zylindrischen Epoxyharzblock eingegossen wird. Alle erforderlichen Anschlüsse und Leitungen werden direkt in diesen Harzblock vergossen, wobei der Austritt dieser Anschlüssen und Leitungen aus dem Block vorgängig frei bestimmt werden kann.

Die Herstellung des erfindungsgemässen Wickelmoduls kann beispielsweise wie folgt erfolgen:

a) Die Enden einer Bahn aus Kationentauschermembran und einer Bahn aus Anionentauschermembran werden miteinander verklebt oder, wenn die Matrixpolymere der Membranen aus einem thermoplastischen Kunststoff bestehen, vorzugsweise mittels desselben Kunststoffs miteinander verschweisst. Die Enden können auch in einen Halterungblock, in den vorgängig eine passende Nut eingefräst wurde, eingelegt werden und die Nut mit den darin eingepassten Membranen verklebt werden. Dieses Ende, an dem die beiden Membranbahnen miteinander verbunden sind, wird in eine formschlüssig passende axiale Aussparung in einer beispielsweise stabförmigen inneren Elektrode eingepasst und darin befestigt. In die innere Elektrode wird vorgängig des Weiteren eine axiale Nut vorgesehen, in die eine Leitung mit einer etwa langlochförmigen Bohrung eingepasst wird (diese zweite Leitung dient später zur Zufuhr von Konzentrat in das innere Konzentratkammerteil oder zur Ableitung von Konzentrat aus diesem).

b) Die beiden Membranen werden dann unter Verwendung von Abstandshaltern oder Ionentauschern oder ionenleitfähigen Geweben zwischen ihnen um die innere Elektrode gewickelt. Dieser Verbund aus beiden Membranen und den dazwischen liegenden Abstandshaltern definiert die spätere Verdünnungskammer. Jede neue aufgewickelte Windung des Verbundes aus Membranen und dazwischenliegenden Abstandhaltern wird mit weiteren Abstandshaltern in definiertem Abstand von der darunterliegenden Windung des Verbundes gehalten. Für die erste Windung des Verbundes wird mit Abstandshaltern für geeigneten Abstand dieser ersten Windung von der Oberfläche der inneren Elektrode gesorgt. Dieser innerste Abstand stellt die erste Windung der Konzentratkammer dar, die mit der inneren Elektrode in leitendem Kontakt steht (d.h. das innere Konzentratkammerteil). Die mittels Abstandshalter erstellten Zwischenräume zwischen den einzelnen Windungen des Verbundes und zwischen der ersten Windung des Verbundes und der Oberfläche der inneren Elektrode definieren den Hauptteil der späteren Konzentratkammer.

c) Bei einer genügenden, frei wählbaren Anzahl aufgewickelter Windungen des Verbundes werden die freien Enden von Kationentauschermembran und Anionentauschermembran miteinander ähnlich verbunden wie bereits oben unter a) geschildert. Das verschlossene Ende (d.h. das nun verschlossene äussere Verdünnungskammerteil) wird, notfalls unter Verwendung eines Dichtungsmaterials und/oder einer Arretierung, an einer äusseren, etwa hohlzylinderförmigen Elektrode axial befestigt. Der Innendurchmesser dieser Elektrode ist etwas grösser ist als der Aussendurchmesser der äussersten Windung. Der dazwischen liegende Abstand kann wiederum gewünschtenfalls mit Abstandshaltern fixiert werden und definiert die äusserste Windung der Konzentratkammer (also das äussere Konzentratkammerteil), die mit der äusseren Elektrode in leitendem Kontakt steht. In diesen letzteren Abstand wird eine axial verlaufende Leitung verlegt, die eine etwa langlochförmige Bohrung aufweisen kann (diese erste Leitung dient später zur Einleitung von Konzentrat in das äussere Konzentratkammerteil oder zur Ableitung von Konzentrat aus diesem).

d) Die nach dem Aufwickeln noch offenen Stirnseiten des Wicklungsmoduls können etwa durch Eintauchen in flüssiges Kunstharz und Aushärten desselben geschlossen werden. Hier eignen sich Kunststoffharze wie Polyurethane, Epoxidharze, Polyester und dergleichen. Dabei werden die Verdünnungskammer und die Konzentratkammer unter Ausbildung von Seitenwänden verschlossen. Die so gebildeten Seitenwände von Verdünnungs- und Konzentratkammer weisen im Profil in etwa die Form einer Spirale auf. Zur Herstellung der Seitenwände können auch wärend des Aufwickelns des Wickelmoduls biegsame Rechteckprofile (z.B. aus EPDM-Gummi) verwendet werden, die dann in die Wicklung eingebaut werden. Diese Profile können vorgängig mit Zuführungen bzw. Ableitungen, etwa durch Bohren, versehen werden. Eine weitere Möglichkeit ist die Verwendung biegsamer Rechteckprofile aus gesintertem Material beim Aufwickeln des Moduls. Da das gesinterte Material bereits Poren enthält, erübrigt sich hier das explizite Anbringen von Zuführungen oder Ableitungen.

Zur Herstellung der Zuführungen für zu entsalzende Lösung in die Verdünnungskammer und der Ableitungen zum Ableiten von entsalztem Wasser aus der Verdünnungskammer können entlang der gesamten spiralförmigen Länge der Seitenwände, die die Verdünnungskammer verschliessen, auf beiden Stirnseiten eine geeignete Anzahl von Bohrungen gesetzt werden. Der axiale Fluss innerhalb der Verdünnungskammer kann, wie in der Technik bekannt, auch mittels Verteilsystemen, die die zu entsalzende Lösung bzw. das entsalzte Wasser unmittelar bei der Zuführung bzw. Ableitung möglichst gut verteilen, optimiert werden. Die Verteilsysteme verhindern auch ein Ausspülen des Ionentauscherharzes, wenn dessen Korngrösse kleiner ist als der Durchmessser der Ableitungen.

Erfindungsgemässe Wicklungsmodule können auch mit mehreren oben geschilderten Verbunden aus Kationentauschermembran, Anionentauschermembran und Abstandshaltern gleichzeitig gewickelt werden (z.B. etwa 2 bis 4). Der Anfang jedes Verbundes, wie oben beschrieben hergestellt, kann in regelmässigen Abständen auf der Oberfläche der inneren Elektrode verankert werden, wie oben beschrieben. Für jeden Verbund wird in der inneren Elektrode eine Nut für eine zugehörige zweite Leitung für Konzentrat vorgesehen. Desgleichen geschieht der Abschluss der Wicklung für jeden Verbund separat wie oben für das Herstellungsverfahren mit einem Verbund geschildert.

In allen Fällen, wo Abstandshalter verwendet werden, kann anstelle dessen oder zusätzlich eine Füllung eines Ionentauschers verwendet werden.

Figur 1 zeigt einen ausgerollten Verbund aus Verdünnungskammer und Konzentratkammer, wie er in dem erfindungsgemässen Wickelmodul zum Einsatz kommt. Die Verdünnungskammer 3 ist perspektivisch etwas erhöht gegenüber der Konzentratkammer 4 dargestellt. Die Verdünnungskammer 3 weist zwei Seitenwände (31,32) auf, die zu den Stirnseiten des aufgewickelten Moduls zeigen werden. Die Füllung mit schwarzen Kreisen der Verdünnungskammer 3 deutet eine Füllung mit Platzhaltern und/oder mit Ionentauscherharz dar. Die Verdünnungskammer 3 weist in der einen Seitenwand 31 drei Zuführungen 71 für zu entsalzende salzhaltige Lösung und in der anderen Seitenwand 32 drei Ableitungen 72 für entsalztes Wasser auf. In der Konzentratkammer 4 ist durch die Musterung ebenfalls eine Füllung mit Abstandshaltern und/oder Ionentauscherharz angedeutet. Gezeigt ist auch, dass die beiden Kammern vor dem Aufwickeln an die innere Elektrode 5 befestigt werden.

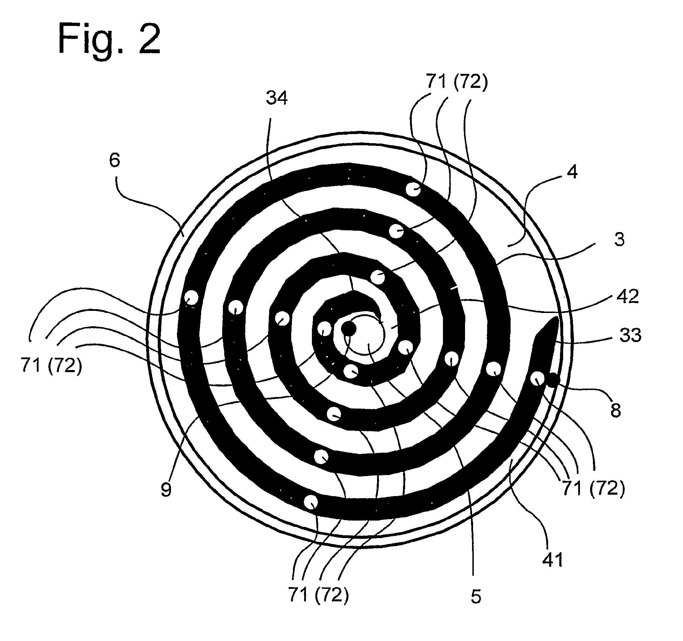

Figur 2 zeigt eine Schnittdarstellung durch ein erfindungsgemässes Wickelmodul, wobei aber zusätzlich zur Veranschaulichung auch die Lage der mehreren Zuführungen 71 gezeigt ist, die die Verdünnungskammer 3 mit zu entsalzender wässeriger Lösung versorgen (es könnten auch die Ableitungen 72 sein). Die Verdünnungskammer 3 ist als schwarze Spirale dargestellt; die Konzentratkammer 4 als weisse Spirale. Zur Versorgung der Konzentratkammer 4 sind die erste Leitung 8 in der Nähe der äusseren Elektrode 6, und die innere Leitung 9, in der Nähe der inneren Elektrode 5 (beide als kleine schwarze Kreise dargestellt) gezeigt. Gezeigt sind auch die Lage des inneren Verdünnungskammerteils 34 und des inneren Konzentratkammerteils 42 und die Lage des äusseren Verdünnungskammerteils 33 und des äusseren Konzentratkammerteils 41. Es ist ersichtlich, dass die Abstände der Zuführungen 71 (oder Ableitungen 72) in Abständen vorhanden sind, die entlang der spiralförmigen Seitenwände (hier ohne Bezugszeichen) nach innen verlaufend immer kleiner werden. Die Zuführungen und Ableitungen sind hier als paarweise hintereinander liegend (als einander verdeckend) zu verstehen. Dies ist aber nicht erfindungswesentlich, es kann sogar bevorzugt sein, die Zuführungen gegenüber den Ableitungen versetzt auf den beiden Seitenwänden anzubringen.

Gegenstand der vorliegenden Erfindung ist auch ein Entsalzungsverfahren unter Verwendung des erfindungsgemässen Wickelmoduls, wie in Anspruch 12 definiert. Das elektrochemische Entsalzungsverfahren, das mittels des erfindungsgemässen Wickelmoduls durchgeführt werden kann, ist analog zu dem Entsalzungsverfahren mit vorbekannten Wickelmodulen, mit Ausnahme dessen, dass die zu entsalzende wässerige Lösung seitlich zugeführt wird und das entsalzte Wasser seitlich abgeleitet wird. Das Verfahren kann eine Elektrodialyse sein (wenn weder in Verdünnungskammer noch in Konzentratkammer Ionentauscherharz vorhanden ist), oder es kann eine Elektrodiarese sein (wenn in der Verdünnungskammer und/oder der Konzentratkammer Ionentauscherharz vorhanden ist).

Das erfindungsgemässe Wickelmodul weist einen viel geringeren Druckabfall in der Verdünnungskammer auf und gestattet daher viel höhere Flüsse im entsalzenden Betrieb. Das erfindungsgemässe Wickelmodul ermöglicht die Entsalzung von wässerigen Lösungen auch bei relativ hohen hydraulischen Leistungen. So ist es bei einem Wickelmodul mit einer Länge von etwa 0,80 bis etwa 1,20 m Länge, bevorzugt etwa 1 m Länge, und mit einem Durchmesser von etwa 20 bis etwa 30 cm, bevorzugt etwa 26 cm, eine bevorzugte Ausführungsform des erfindungsgemässen Verfahrens, dem Wickelmodul zu entsalzende salzhaltige wässerige Lösung mit einem Fluss von etwa 2,5 bis etwa 3,3 Kubikmeter pro Stunde, bevorzugt etwa 3 Kubikmeter pro Stunde, über die Zuleitung (71) zuzuführen (wenn das Wickelmodul mehrere Verdünnungskammern (3) mit je einer Zuleitung (71) oder mit je mehreren Zuleitungen (71) aufweist, über die Gesamtzahl aller Zuleitungen (71)). Als "Länge" des Wickelmoduls wird hier die Distanz von der einen, durch die eine Seitenwand oder die einen Seitenwände (31) gebildete Stirnseite zu der anderen, durch die andere Seitenwand oder die anderen Seitenwände (32) gebildete Stirnseite verstanden. Als "Durchmesser" des Wickelmoduls wird der Aussendurchmesser der äussersten Windung(en) der Konzentratkammer(n) (4) verstanden; da diese in elektrisch leitendem Kontakt mit der äusseren Elektrode (6) steht (stehen), ist dieser Durchmesser bei Verwendung einer zylindrischen äusseren Elektrode (6) gleich dem Innendurchmesser der äusseren Elektrode (6). Dadurch, dass eine innere Leitung für die Verdünnungskammer beim erfindungsgemässen Wickelmodul nicht mehr erforderlich ist, vergrössert sich der Anteil der Fläche der inneren Elektrode, der elektrochemisch aktiv sein kann. Bei den vorbekannten Wickelmodulen geht ein Teil dieser elektrochemisch aktiven Fläche durch die Anwesenheit der zweiten inneren Leitung, die die Verdünnungskammer versorgt, und die an der Oberfläche der inneren Elektrode liegen muss, verloren.

## Patentansprüche

1. Wickelmodul zur elektrochemischen Entsalzung wässeriger salzhaltiger Lösungen, umfassend:

a) mindestens eine spiralförmig aufgewickelte Verdünnungskammer (3) mit spiralförmigen Seitenwänden (31,32) und mit einem inneren Verdünnungskammerteil (34); mindestens eine spiralförmig aufgewickelte Konzentratkammer (4) mit einem äusseren Konzentratkammerteil (41) und einem inneren Konzentratkammerteil (42); dergestalt, dass inneres Verdünnungskammerteil (34) und inneres Konzentratkammerteil (42) in aufgewickelten Zustand einen inneren, axialen Hohlraum definieren;

b) eine im inneren axialen Hohlraum verlaufende innere Elektrode (5); eine die aufgewickelte Verdünnungskammer (3) und die aufgewickelte Konzentratkammer (4) umgebende äussere Elektrode (6); wobei das äussere Konzentratkammerteil (41) von einer äussersten Windung der Konzentratkammer (4) gebildet ist, in welcher äussersten Windung der Abstand zur äusseren Elektrode (6) mittels Abstandshaltern erstellt ist und das äussere Konzentratkammerteil (41) mit der äusseren Elektrode (6) in leitendem Kontakt steht; und das innere Konzentratkammerteil (42) von einer ersten Windung der Konzentratkammer (4) gebildet ist, in welcher ersten Windung der Abstand zur Oberfläche der inneren Elektrode (5) mittels Abstandshaltern erstellt ist und das innere Konzentratkammerteil (42) mit der inneren Elektrode (5) in leitendem Kontakt steht;

c) mehrere Zuführungen (71), die in der einen spiralförmigen Seitenwand (31) vorgesehen sind und zur Zufuhr von zu entsalzender wässeriger salzhaltiger Lösung in die Verdünnungskammer (3) befähigt sind; und mehrere Ableitungen (72), die in der anderen spiralförmigen Seitenwand (32) vorgesehen sind und zur Ableitung von entsalzter wässeriger Lösung aus der Verdünnungskammer (3) befähigt sind; und

d) eine erste Leitung (8), die zur Zufuhr von Konzentrat in das äussere Konzentratkammerteil (41) und/oder zur Ableitung von Konzentrat aus dem äusseren Konzentratkammerteil (41) befähigt ist; und eine zweite Leitung (9), die zur Ableitung von Konzentrat aus dem inneren Konzentratkammerteil (42) und/oder zur Zufuhr von Konzentrat in das innere Konzentratkammerteil (42) befähigt ist.

2.  Wickelmodul nach Anspruch 1, **dadurch gekennzeichnet, dass** es mehrere spiralförmig aufgewickelte Verdünnungskammmern (3) und eine zu der Zahl Verdünnungskammern gleiche Anzahl Konzentratkammern (4) umfasst.

3.  Wickelmodul nach Anspruch 1 oder 2, **dadurch gekennzeichnet, dass** die Zuführungen (71) in gleichen Abständen entlang der Spiralform der einen Seitenwand (31) angeordnet sind und dass die Ableitungen (72) in gleichen Abständen entlang der Spiralform der anderen Seitenwand (32) angeordnet sind.

4.  Wickelmodul nach Anspruch 3, **dadurch gekennzeichnet, dass** in der einen Seitenwand (31) eine Anzahl N von Zuführungen (71) mit kreisförmigem Querschnitt und/oder in der anderen Seitenwand (32) eine Anzahl N von Ableitungen (72) mit kreisförmigem Querschnitt vorgesehen sind, wobei die Anzahl N nach der Formel:

$$N = (L - a)/(d + a)$$

bestimmt ist, in welcher Formel L die Länge der Seitenwände (31, 32) in einem ausgerolltem Zustand der Verdünnungskammer (3) ist, a der Abstand zwischen den Zuführungen (71) entlang der Seitenwand (31) und/oder der Abstand zwischen den Ableitungen (72) entlang der Seitenwand (32) ist, und d der Durchmesser der Zuführungen (71) und/oder der Ableitungen (72) ist.

5.  Wickelmodul nach Anspruch 1 oder 2, **dadurch gekennzeichnet, dass** die Zuführungen (71) entlang der Spiralform der eine Seitenwand (31) in Abständen angeordnet sind, die nach innen hin kleiner werden, und dass die Ableitungen (72) entlang der Spiralform der anderen Seitenwand (32) in Abständen angeordnet sind, die nach innen hin kleiner werden.

6.  Wickelmodul nach einem der Ansprüche 1 bis 5, **dadurch gekennzeichnet, dass** die Zuführungen (71) und die Ableitungen (72) Bohrlöcher in den spiralförmigen Seitenwänden (31,32) sind.

7.  Wickelmodul nach einem der Ansprüche 1 bis 6, **dadurch gekennzeichnet, dass** die Verdünnungskammer(n) (3) ein Ionentauscherharz umfassen.

8.  Wickelmodul nach einem der Ansprüche 1 bis 7, **dadurch gekennzeichnet, dass** die Konzentratkammer(n) (4) ein Ionentauscherharz umfassen.

9.  Wickelmodul nach einem der Ansprüche 1 bis 6, **dadurch gekennzeichnet, dass** die Verdünnungskammer(n) (3) ein ionenleitfähiges Gewebe umfassen.

10. Wickelmodul nach einem der Ansprüche 1 bis 6 oder 9, **dadurch gekennzeichnet, dass** die Konzentratkammer (n) (4) ein ionenleitfähiges Gewebe umfassen.

11. Wickelmodul nach einem der Ansprüche 1 bis 10, **dadurch gekennzeichnet, dass** die Seitenwände (31, 32) Rechteckprofile enthalten oder aus Rechteckprofilen bestehen.

12. Verfahren zur Entsalzung einer wässerigen salzhaltigen Lösung unter Verwendung des Wickelmoduls nach Anspruch 1, wobei gleichzeitig:

a) zu entsalzende wässerige salzhaltige Lösung mittels der Zuführungen (71) der Verdünnungskammer (3) zugeführt wird;

b) entweder Konzentrat mittels der ersten Leitung (8) in das äussere Konzentratkammerteil (41) zugeführt und mittels der zweiten Leitung (9) aus dem inneren Konzentratkammerteil (42) abgeleitet wird; oder Konzentrat mittels der zweiten Leitung (9) in das innere Konzentratkammerteil (42) zugeführt und mittels der ersten Leitung (8) aus dem äusseren Konzentratkammerteil (41) abgeführt wird;

c) an die Elektroden (5,6) ein Gleichspannungspotential angelegt wird, das in dem Wickelmodul einen elektrochemischen Strom erzeugen kann; und

d) entsalzte wässerige Lösung mittels der Ableitungen (72) aus der Verdünnungskammer (3) abgeleitet wird.

13. Verfahren nach Anspruch 12, **dadurch gekennzeichnet, dass** ein Wickelmodul mit einer Länge von 0,80 bis 1,20, bevorzugt etwa 1 m Länge und einem Durchmesser von 20 bis 30 cm, bevorzugt etwa 26 cm, verwendet wird, und dass der Verdünnungskammer (3) mittels der Zuführungen (71) zu entsalzende wässerige salzhaltige Lösung mit einem Fluss von 2,5 bis 3,3, bevorzugt etwa 3 Kubikmeter pro Stunde zugeführt wird.

**Claims**

1. A spiral wound module for the electrochemical desalination of aqueous salt-containing solutions, comprising:

a) at least one spirally wound-up dilution chamber (3) having spiral side walls (31, 32) and having an inner dilution chamber part (34); at least one spirally wound-up concentrate chamber (4) having an outer concentrate chamber part (41) and an inner concentrate chamber part (42); such that the inner dilution chamber part (34) and the inner concentrate chamber part (42) in the wound-up state define an inner, axial cavity;

b) an inner electrode (5) running in the inner axial cavity; an outer electrode (6) surrounding the wound-up dilution chamber (3) and the wound-up concentrate chamber (4); whereby the outer concentrate chamber part (41) is formed of an outermost winding of the concentrate chamber (4), in which outermost winding the distance to the outer electrode (6) is formed by means of spacers and the outer concentrate chamber part (41) is in conductive contact with the outer electrode (6); and the inner concentrate chamber part (42) is formed of a first winding of the concentrate chamber (4), in which first winding the distance to the surface of the inner electrode (5) is formed by means of spacers and the inner concentrate chamber part (42) is in conductive contact with the inner electrode (5);

c) a plurality of feeds (71) which are provided in the one spiral side wall (31) and are capable of feeding aqueous salt-containing solution to be desalinated into the dilution chamber (3); and a plurality of discharges (72) which are provided in the other spiral side wall (32) and are capable of discharging desalinated aqueous solution from the dilution chamber (3); and

d) a first conduit (8) which is capable of feeding concentrate into the outer concentrate chamber part (41) and/or of discharging concentrate from the outer concentrate chamber part (41); and a second conduit (9) which is capable of discharging concentrate from the inner concentrate chamber part (42) and/or of feeding concentrate into the inner concentrate chamber part (42).

2. The spiral wound module as claimed in claim 1, **characterised in that** it comprises a plurality of spirally wound-up dilution chambers (3) and a number of concentrate chambers (4) identical to the number of dilution chambers (3).

3. The spiral wound module as claimed in claim 1 or 2, **characterised in that** the feeds (71) are arranged at equal distances along the spiral shape of the one side wall (31) and **in that** the discharges (72) are arranged at equal distances along the spiral shape of the other side wall (32).

4. The spiral wound module as claimed in claim 3, **characterised in that** in the one side wall (31) a number N of feeds (71) with circular cross-section and/or in the other side wall (32) a number N of discharges (72) with circular cross-section is provided, whereby the number N is determined by the formula:

$$N = (L - a)/(d + a)$$

in which formula L is the length of the side walls (31, 32) in an unwound state of the dilution chamber (3), a is the distance between the feeds (71) along the side wall (31) and/or the distance between the discharges (72) along the side wall (32), and d is the diameter of the feeds (71) and/or of the discharges (72).

5. The spiral wound module as claimed in claim 1 or 2, **characterised in that** the feeds (71) are arranged along the spiral shape of the one side wall (31) at distances which become smaller towards the inside, and **in that** the discharges (72) are arranged along the spiral shape of the other side wall (32) at distances which become smaller towards the inside.

6. The spiral wound module as claimed in any of claims 1 to 5, **characterised in that** the feeds (71) and the discharges (72) are drilled holes in the spiral side walls (31, 32).

7. The spiral wound module as claimed in any of claims 1 to 6, **characterised in that** the dilution chamber(s) (3) comprises or comprise an ion exchange resin.

8. The spiral wound module as claimed in any of claims 1 to 7, **characterised in that** the concentrate chamber(s) (4) comprises or comprise an ion exchange resin.

9. The spiral wound module as claimed in any of claims 1 to 6, **characterised in that** the dilution chamber(s) (3) comprises or comprise an ion-conductive fabric.

10. The spiral wound module as claimed in any of claims 1 to 6 or 9, **characterised in that** the concentrate chamber (s) (4) comprises or comprise an ion-conductive fabric.

11. The spiral wound module as claimed in any of claims 1 to 10, **characterised in that** the side walls (31, 32) comprise rectangular profiles or consist of rectangular profiles.

12. A process for the desalination of an aqueous salt-containing solution using the spiral wound module as claimed in claim 1, wherein simultaneously:

   a) aqueous salt-containing solution to be desalinated is fed by means of the feeds (71) to the dilution chamber (3);
   b) either concentrate is fed by means of the first conduit (8) into the outer concentrate chamber part (41) and is discharged by means of the second conduit (9) from the inner concentrate chamber part (42); or concentrate is fed by means of the second conduit (9) into the inner concentrate chamber part (42) and is removed by means of the first conduit (8) from the outer concentrate chamber part (41);
   c) a DC potential which can produce an electrochemical current in the spiral wound module is applied to the electrodes (5, 6); and
   d) desalinated aqueous solution is discharged by means of the discharges (72) from the dilution chamber (3).

13. The process as claimed in claim 12,
   **characterised in that** a spiral wound module with a length of 0.80 to 1.20 m, preferably about 1 m, and a diameter of 20 to 30 cm, preferably about 26 cm, is used, and **in that** salt-containing solution to be desalinated is fed by means of the feeds (71) to the dilution chamber (3) at a flow of 2.5 to 3.3 cubic metres per hour, preferably about 3 cubic metres per hour.

**Revendications**

1. Module enroulé pour la désalinisation électrochimique de solutions aqueuses contenant du sel, comprenant:

   a) au moins une chambre de dilution enroulée en spirale (3) ayant des parois latérales en spirale (31, 32) et ayant une partie de chambre de dilution intérieure (34); au moins une chambre de concentration enroulée en spirale (4) ayant une partie de chambre de concentration extérieure (41) et une partie de chambre de concentration intérieure (42); de telle sorte que la partie de chambre de dilution intérieure (34) et la partie de chambre de concentration intérieure (42) définissent, dans un état enroulé, une cavité axiale intérieure;
   b) une électrode intérieure (5) s'étendant dans la cavité axiale intérieure; une électrode extérieure (6) entourant la chambre de dilution enroulée (3) et la chambre de concentration enroulée (4); la partie de chambre de concentration extérieure (41) étant formée par un enroulement le plus à l'extérieur de la chambre de concentration (4), dans lequel enroulement le plus à l'extérieur la distance par rapport à l'électrode extérieure (6) étant créée au moyen d'entretoises d'écartement et la partie de chambre de concentration extérieure (41) étant en contact électrique avec l'électrode extérieure (6); et la partie de chambre de concentration intérieure (42) étant formée par un premier enroulement de la chambre de concentration (4), dans lequel premier enroulement la distance par rapport à la surface de l'électrode intérieure (5) étant créée au moyen d'entretoises d'écartement et la partie de chambre de concentration intérieure (42) étant en contact électrique avec l'électrode intérieure (5);

c) plusieurs alimentations (71) qui sont prévues dans une paroi latérale en spirale (31) et qui sont capables d'acheminer de la solution aqueuse contenant du sel à désaliniser dans la chambre de dilution (3); et plusieurs évacuations (72) qui sont prévues dans l'autre paroi latérale en spirale (32) et qui sont capables d'évacuer de la solution aqueuse désalinisée hors de la chambre de dilution (3); et

d) une première conduite (8) qui est capable d'acheminer du concentré dans la partie de chambre de concentration extérieure (41) et/ou d'évacuer du concentré hors de la partie de chambre de concentration extérieure (41); et une deuxième conduite (9) qui est capable d'évacuer du concentré hors de la partie de chambre de concentration intérieure (42) et/ou d'acheminer du concentré dans la partie de chambre de concentration intérieure (42).

2. Module enroulé selon la revendication 1,
**caractérisé en ce qu'**il comprend plusieurs chambres de dilution enroulées en spirale (3) et un nombre de chambres de concentration (4) identique au nombre de chambres de dilution.

3. Module enroulé selon la revendication 1 ou 2, **caractérisé en ce que** les alimentations (71) sont agencées à égales distances le long de la forme en spirale de l'une paroi latérale (31) et que les évacuations (72) sont agencées à égales distances le long de la forme en spirale de l'autre paroi latérale (32).

4. Module enroulé selon la revendication 3,
**caractérisé en ce que** dans une paroi latérale (31), un nombre N d'évacuations (71) à section transversale circulaire et/ou dans l'autre paroi latérale (32), un nombre N d'évacuations (72) à section transversale circulaire sont prévus, le nombre N étant déterminé d'après la formule :

$$N = (L-a)/(d+a),$$

dans laquelle formule L est la longueur des parois latérales (31, 32) dans un état déroulé de la chambre de dilution (3), a est la distance entre les alimentations (71) le long de la paroi latérale (31) et/ou la distance entre les évacuations (72) le long de la paroi latérale (32), et d est le diamètre des alimentations (71) et/ou des évacuations (72).

5. Module enroulé selon la revendication 1 ou 2, **caractérisé en ce que** les alimentations (71) sont agencées le long de la forme en spirale de l'une paroi latérale (31) à des distances qui deviennent plus petites vers l'intérieur, et **en ce que** les évacuations (72) sont agencées le long de la forme en spirale de l'autre paroi latérale (32) à des distances qui deviennent plus petites vers l'intérieur.

6. Module enroulé selon l'une des revendications 1 à 5, **caractérisé en ce que** les alimentations (71) et les évacuations (72) sont des trous percés dans les parois latérales en spirale (31, 32).

7. Module enroulé selon l'une des revendications 1 à 6, **caractérisé en ce que** la (les) chambre(s) de dilution (3) comprend (comprennent) une résine échangeuse d'ions.

8. Module enroulé selon l'une des revendications 1 à 7, **caractérisé en ce que** la (les) chambre(s) de concentration (4) comprend (comprennent) une résine échangeuse d'ions.

9. Module enroulé selon l'une des revendications 1 à 6, **caractérisé en ce que** la (les) chambre(s) de dilution (3) comprend (comprennent) une toile conductrice d'ions.

10. Module enroulé selon l'une des revendications 1 à 6 ou 9, **caractérisé en ce que** la (les) chambres de concentration (4) comprend (comprennent) une toile conductrice d'ions.

11. Module enroulé selon l'une des revendications 1 à 10, **caractérisé en ce que** les parois latérales (31, 32) contiennent des profilés rectangulaires ou sont constituées de profilés rectangulaires.

**EP 1 628 746 B1**

12. Procédé pour désaliniser une solution aqueuse contenant du sel en utilisant le module enroulé selon la revendication 1, dans lequel simultanément:

a) de la solution aqueuse contenant du sel à désaliniser est introduite au moyen des alimentations (71) de la chambre de dilution (3);

b) soit du concentré est introduit dans la partie de chambre de concentration extérieure (41) au moyen de la première conduite (8) et est évacué hors de la partie de chambre de concentration intérieure (42) au moyen de la deuxième conduite (9); soit du concentré est introduit dans la partie de chambre de concentration intérieure (42) au moyen de la deuxième conduite (9) et est évacué hors de la partie de chambre de concentration extérieure (41) au moyen de la première conduite (8);

c) un potentiel de tension continue qui peut produire un courant électrochimique dans le module enroulé, est appliqué aux électrodes (5, 6) ; et

d) la solution aqueuse désalinisée est évacuée hors de la chambre de dilution (3) au moyen des évacuations (72).

13. Procédé selon la revendication 12,
**caractérisé en ce qu'un** module enroulé ayant une longueur de 0,80 à 1,20 m, de préférence une longueur d'environ 1 m, et un diamètre de 20 à 30 cm, de préférence environ 26 cm, est utilisé, et **en ce que** la chambre de dilution (3) est alimentée au moyen des alimentations (71) en solution aqueuse contenant du sel à désaliniser avec un débit de 2,5 à 3,3 mètres cube par heure, de préférence environ 3 mètres cube par heure.

Fig. 1

EP 1 628 746 B1

# Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2000070679 A
- US 4225413 A
- EP 0570341 A

**In der Beschreibung aufgeführte Nicht-Patentliteratur**

- **Wen et al.** Spirally wound electrodialysis (SpED) modules. *Desalination,* 1995, vol. 101, 79-91